# EUROPEAN PATENT SPECIFICATION

(11) **EP 1 372 144 B1**
(45) Date of publication and mention of the grant of the patent: **26.11.2008**
(21) Application number: 03253673.2
(22) Date of filing: 11.06.2003
(51) Int. Cl.: G11B 7/08, G11B 7/12, G11B 7/22

(54) **Method for arranging optical pickup system and optical recording and/or reproducing apparatus having optical pickup system arranged using the same**
Verfahren zum Anordnen eines optischen Abtastsystems und optisches Aufzeichnungs- und/oder Wiedergabegerät mit einem, nach diesem Verfahren angeordneten, optischen Abtastsystem
Procédé d' agencement d'un capteur optique et et appareil d'enregistrement et/ou de lecture optique comprenant un tel capteur optique

(30) Priority: 14.06.2002 KR 2002033398; 22.04.2003 KR 2003025530
(43) Date of publication of application: 17.12.2003
(73) Proprietor: SAMSUNG ELECTRONICS CO., LTD., Suwon-City, Kyungki-do (KR)
(72) Inventor: Kim, Bong-gi, 906-503 Byuckjeokgol 9-danji Apt., Suwon-si, Gyeonggi-do (KR); Park, Chun-seong, 321-902 Samick Apt., Suwon-si, Gyeonggi-do (KR); Park, Soo-han, 511-901 Samsung 5-cha Apt., Gyeonggi-do (KR); Lee, Moon-hwan, 612-1201 Shinjeong Maeul 6-danji, Yongin-si, Gyeonggi-do (KR); Lee, Hyo-chan, Seoul (KR); Kim, Jong-uk, (301) Hyundai Heights Villa, Yongin-si, Gyeonggi-do (KR); Park, Seong-su, 611-2104 Jugong 6-danji Apt., Suwon-si, Gyeonggi-do (KR); Heor, Tae-youn, 133-404 Shinmaetan Apt., Suwon-si, Gyeonggi-do (KR); Nam, Do-hwan, 106-1508 Suji 4-cha Samsung Apt., Yongin-si, Gyeonggi-do (KR)
(74) Representative: Robinson, Ian Michael

(56) References cited:
- EP-A- 0 874 358
- EP-A- 1 047 051
- EP-A- 1 304 690
- US-A- 6 044 048
- US-A1- 2001 026 525
- PATENT ABSTRACTS OF JAPAN vol. 018, no. 103 (P-1696), 18 February 1994 (1994-02-18) -& JP 05 298731 A (NEC HOME ELECTRON LTD), 12 November 1993 (1993-11-12)

## Description

The present invention relates to a method for arranging an optical pickup system and an optical recording and/or reproducing apparatus having an optical pickup system arranged using the same.

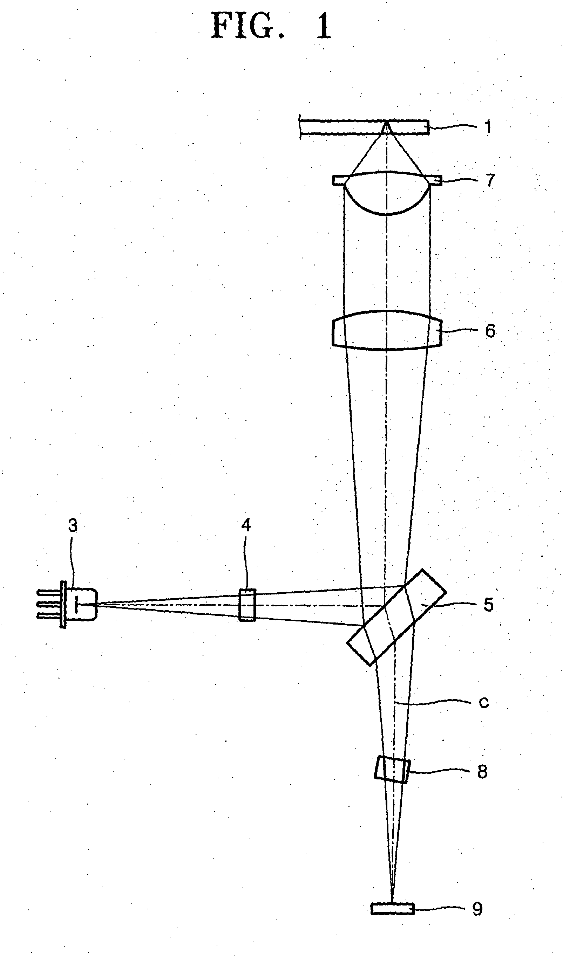

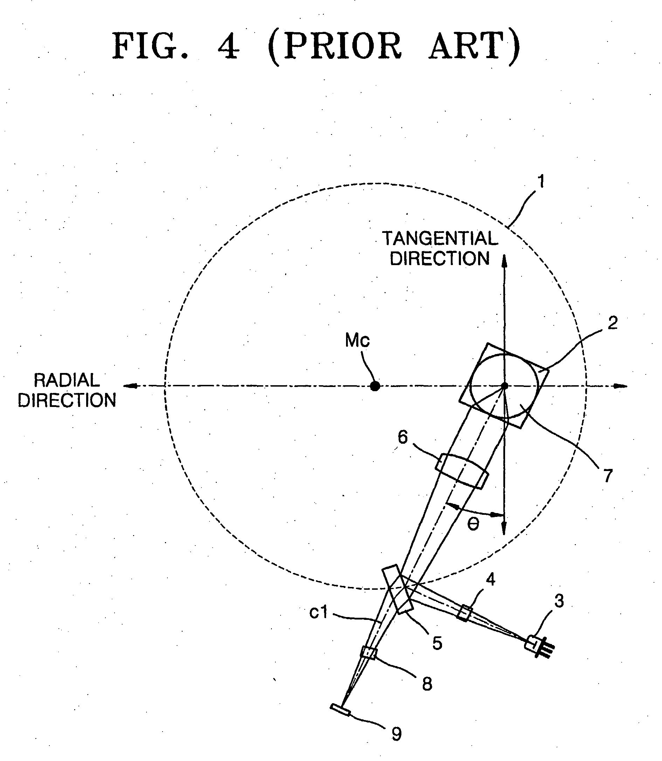

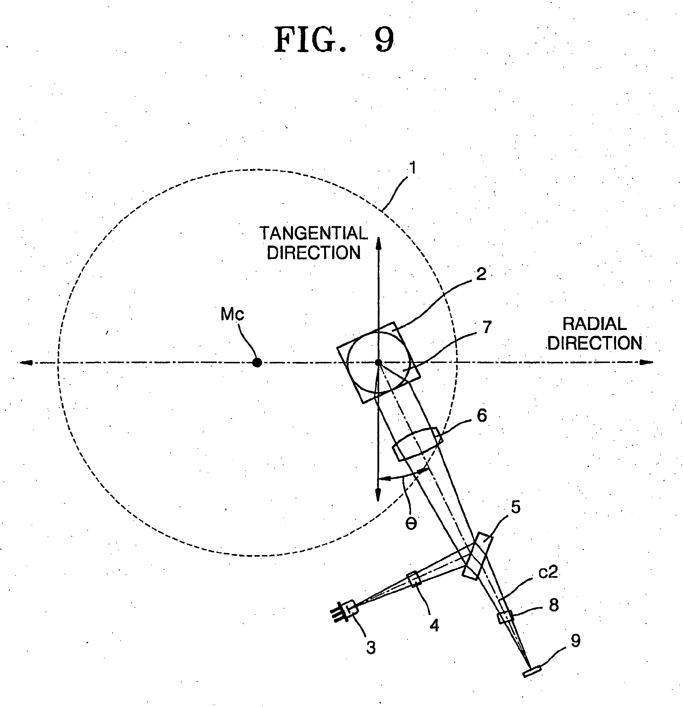

Figure 1 schematically shows an example of the optical configuration of an optical pickup. Referring to Figure 1, the optical pickup includes a light source 3 for emitting light of a predetermined wavelength, a plate-type beam splitter 5 that changes the propagation path of the light beam emitted by the light source 3, an objective lens 7 that focuses the incident light beam to a spot on a recording surface of an optical disc 1, and a photodetector 9 that detects an information signal and an error signal by receiving the light beam which is reflected from the recording surface of the optical disc 1 and sequentially passes through the objective lens 7 and the plate-type beam splitter 5. The optical pick-up, as shown in Figures 4 and 9, is arranged such that all components of the optical pickup system, except for the objective lens 7, are approximately parallel to the optical disc 1 by redirecting the optical path by 90 degrees with a reflecting mirror 2. In Figure 1, reference numerals 4, 6, and 8 denote a grating, a collimating lens, and a concave lens. The grating 4 is disposed between the light source 3 and the plate-type beam splitter 5 for diffracting a light beam emitted from the light source 3 into 0^{th}-order and ±1^{st}-order beams in order to detect a tracking error signal by a three-beam method.

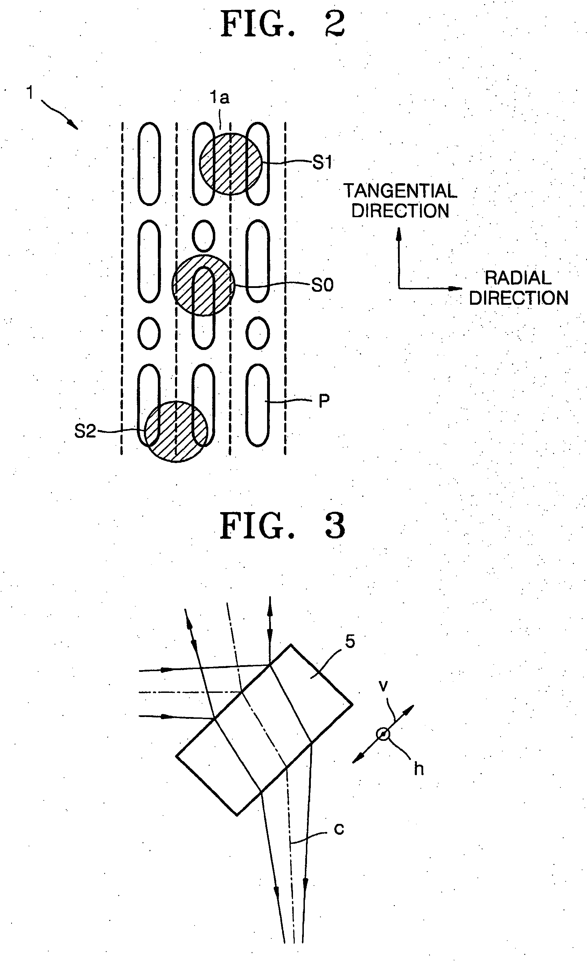

Referring to Figure 2, in a normal state, a main light beam corresponding to the 0^{th}-order diffracted light beam passing through the grating 4 is focused on a main track 1a as a main light beam spot S0, while sub-beams corresponding to the ±1^{st} -order beams diffracted by the grating 4 are centered as sub-beam spots S1 and S2 approximately symmetrical to radial and tangential directions relative to the main light beam spot S0 on positions slanted with respect to the main track 1a. The main light beam is reflected/diffracted from the optical disc 1 to produce a reflected/diffracted light beam which will be described later. In Figure 2, a dotted line is used to distinguish one track from another.

When the grating 4 is provided to detect a tracking error signal by the three-beam method, the photodetector 9 is comprised of a main photodetector and a pair of sub-photodetectors for detecting a main light beam and sub-beams reflected from the optical disc 1, respectively. The collimating lens 6 is disposed between the plate-type beam splitter 5 and the objective lens 7 for converting a divergent light beam emitted from the light source 3 into a parallel light beam. The concave lens 8 is positioned between the plate-type beam splitter 5 and the photodetector 9 for spreading out a light beam focused on the photodetector 9. The concave lens 8 is inclined in a direction opposite to the direction in which the plate-beam splitter 5 is tilted in order to remove coma aberrations on a light beam passing through the plate-type beam splitter 5.

In the optical pickup described above, the light beam emitted from the light source 3 is reflected by the plate-type beam splitter 5 and proceeds toward the optical disc 1, and the light beam reflected from the optical disc 1 transmits through the beam splitter and travels to the photodetector 9. Hereinafter, an axis of propagation path of the light beam transmitted through the beam splitter 5 to the photodetector 9 is called an optical path axis c.

Referring to Figure 3, since the plate-type beam splitter 5 is tilted with respect to the optical path axis c, an optical length in a horizontal direction h of the light beam transmitted through the plate-type beam splitter 5 remains constant regardless of the incident location of light beam on the beam splitter 5 while an optical length in a vertical direction v varies depending on the location. This causes astigmatism due to difference in focal points in the horizontal and vertical directions h and v. Here, an axis in the vertical direction v is one axis, i.e., the major axis of an oval light beam suffering from astigmatism, and an axis parallel to the vertical axis is an astigmatism axis.

Thus, the optical pickup of Figure 1 arranged so that the light beam reflected from the optical disc 1 is transmitted through the plate-type beam splitter 5 to the photodetector 9 can detect a focus error signal using an astigmatism induced in the light beam transmitted through the plate-type beam splitter 5.

Meanwhile, a motor (not shown) for rotating the optical disc 1 and an optical pickup system are mounted on a deck of an optical recording and/or reproducing apparatus for recording and/or reproducing information on and/or from the optical disc, such as a disc driver or disk player, using light. Since the size of deck affects the overall size of the optical recording and/or reproducing apparatus, a way to arrange the optical pickup system in the deck is very important for making the optical recording and/or reproducing apparatus more compact.

In the case of detecting a focus error signal by an astigmatism method using the plate-type beam splitter 5 as an optical path changer instead of a separate astigmatism lens as shown in Figure 1, the photodetector 9 needs to be oriented at 45 degrees for detecting a focus error signal by an astigmatism method when the optical pick system is arranged so that the optical path axis c is parallel to a tangential direction. Here, the tangential direction means the direction of a series of pits or marks formed along a track on the optical disc 1.

In order to detect a focus error signal by an astigmatism method as well as a tracking error signal by a three-beam method, the photodetector 9 has to be formed to include a main photodetector having four or more sections and a pair of sub-photodetectors on either side as is well known in the art. Where the photodetector 9 rotates at 45 degrees to detect a focus error signal by an astigmatism method using astigmatism occurring at the plate-type beam splitter, sub-beams for detecting a tracking error signal by a three-beam method may not be received by the sub-photodetectors but deviate from them.

Thus, if the photodetector 9 rotates at 45 degrees, it is not possible to detect a tracking error signal by the three-beam method since the sub-beams are not received onto the sub-photodetectors. Furthermore, this eventually increases the space required for mounting the photodetector 9 on the deck of an optical recording and/or reproducing apparatus since the height needed for installing the photodetector 9 corresponds to the length of a diagonal line of the photodetector 9.

To solve these problems, when the optical pick-up system includes the plate-type beam splitter 5 on the deck of the optical recording and/or reproducing apparatus and is arranged to two-dimensionally arrange all components of the optical pickup system except the objective lens 7 approximately parallel to the optical disc 1 by redirecting the optical path by 90 degrees with the reflecting mirror 2, the optical pickup system has to be arranged so that the optical path axis c is inclined at 45 degrees with respect to a tangential direction. Here, the tangential direction perpendicular to the radial direction refers to the direction of a series of pits or marks formed on the optical disc 1.

However, it is difficult to arrange the optical pickup system so that the optical path axis c is tilted relative to the tangential direction by 45 degrees due to the size of the motor mounted on the deck for rotating the optical disc 1. In general, the optical path axis c is inclined at an angle of less than 35 degrees relative to the tangential direction to avoid the contact with the motor.

For this reason, as shown in Figure 4, conventionally, the optical pickup system is arranged so that an optical path axis c1 is inclined with respect to the tangential direction at a predetermined angle θ, for example, 35 degrees, and the photodetector 9 is placed at the location close to a rotation center Mc of a motor (not shown) mounted on a deck for rotating the optical disc 1.

Reference numeral 2 in Figure 4 denotes a reflecting mirror that redirects the proceeding path of a light beam emitted from the light source 3 toward the optical disc 1.

Since the optical pickup system is arranged so that an angle of the optical path axis c1 relative to the tangential direction is less than 45 degrees, for example, 35 degrees, the photodetector 9 is comprised of a main photodetector 9a split into four sections by lines d1 and d2 oblique 5-10 degrees with respect to axes of tangential direction and radial direction, respectively, and a pair of sub-photodetectors 9b and 9c.

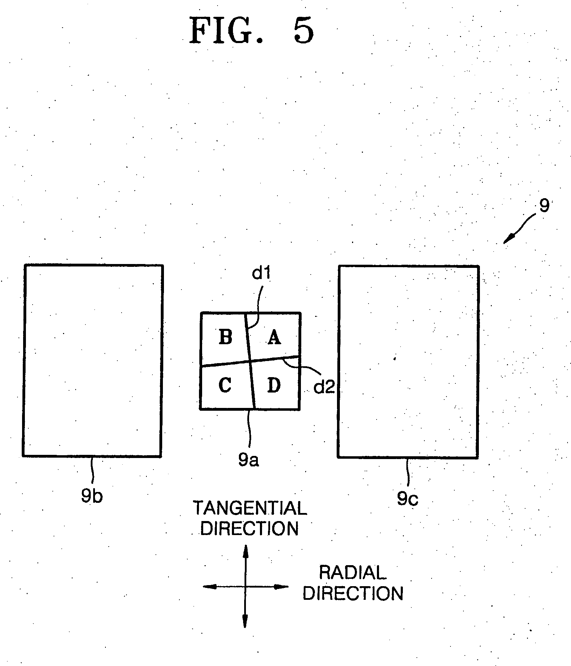

Here, in Figures 5, 7, 8A-8C, and 10-14, an axis of the tangential direction can correspond one-to-one to a tangential direction on the optical disc 1, while an axis of the radial direction can correspond one-to-one to a radial direction on the optical disc 1.

The use of an optical pickup system arranged as shown in Figure 4 and a photodetector constructed as shown in Figure 5 achieves the same effect as when using a typically split photodetector for the photodetector 9 and rotating the photodetector at 45 degrees. Here, the typically split photodetector refers to a photodetector in which the main photodetector is split to be rectangular or square.

In Figure 4, θ denotes an angle between the optical path axis c1 and the axis in the tangential direction. The optical path axis c1 forms an angle 90°-θ with the axis in the radial direction that transverses through the rotation center Mc of the motor mounted on the deck for rotating the optical disc 1.

Here, as shown in Figure 4, when the photodetector 9 is placed toward the rotation center Mc of the motor, the light source 3 is placed at the location farther away from the rotation center Mc than the photodetector 9 since it is not possible to position the light source 3 near the rotation center Mc due to space restrictions. The use of an optical pickup system arranged as shown in Figure 4 and a photodetector constructed as shown in Figure 5 allows detection of a focus error signal by the astigmatism method employing astigmatism occurring at the plate-type beam splitter 5 used as an optical path changer as well as a tracking error signal by the three-beam method.

Thus, the conventional method of arranging the optical pickup facilitates detection of a tracking error signal by the three-beam method while making an optical recording and/or reproducing apparatus compact by reducing the space required to install the optical pickup system, as compared to the case of arranging the optical pickup system so that the optical path axis c1 is parallel to the axis of the tangential direction.

The problem with the conventional method of arranging the optical pickup system so that the optical path axis c1 is tilted relative to the axis of the tangential direction and the photodetector 9 is placed near the rotation center Mc of the motor arises when a single photodetector is used to detect a tracking error signal by a differential phase detection (DPD) method and a tracking error signal by the three-beam method.

CD and DVD compatible optical pickups having a single light source and a single photodetector or having two light sources and a single photodetector require detection of tracking error signals using both DPD and three-beam methods.

Typically, in the case of CDs, a tracking error signal detected by the three-beam method is used to perform tracking control, whereas in DVDs, a tracking error signal detected by the DPD method is used to do the same.

However, the conventional method for arranging the optical pickup system makes it difficult to detect tracking error signals by both DPD and three-beam methods using a single photodetector based on the following aspects.

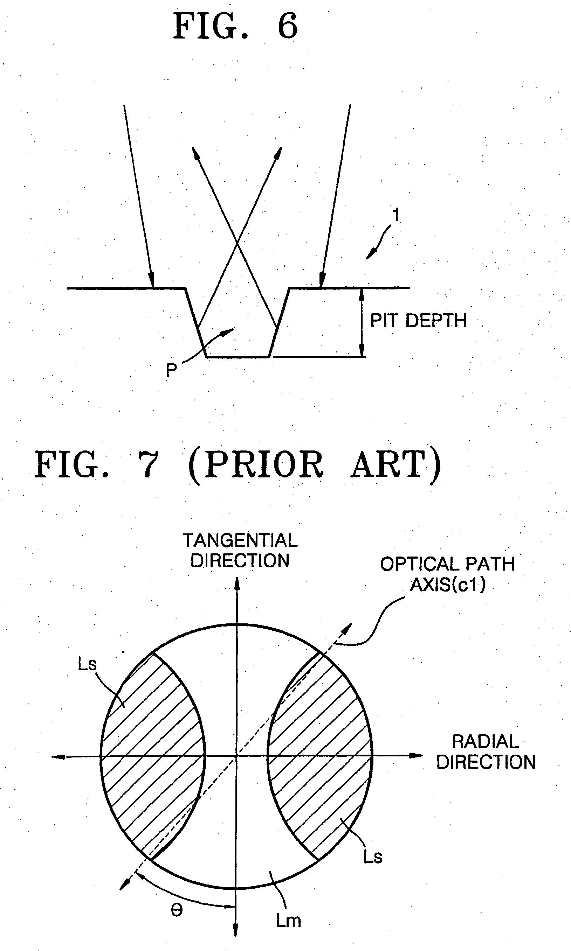

Referring to Figure 6, when a light beam spot is formed in a pit P or mark on the optical disc 1, diffraction occurs in an edge of the pit P. Thus, as shown in Figure 7, the light beam reflected/diffracted from the pit P on the optical disc 1 has a structure in which a 0^{th} -order diffracted beam Lm and ±1^{st}-order diffracted beams Ls generated by diffraction on the edge of the pit P partially overlap each other. Here, as shown in Figure 7, a main light beam corresponding to the 0^{th} -order beam and sub-beams corresponding to the ±1^{st}-order beams diffracted by the grating 4 have a partially overlapped structure since those light beams are reflected from the optical disc 1 and diffracted by the pit P or mark. However, a reflected/diffracted light beam used for detecting a tracking error signal by DPD relates to the main light beam, so only the reflected/diffracted light beam for the main light beam will be described hereinafter.

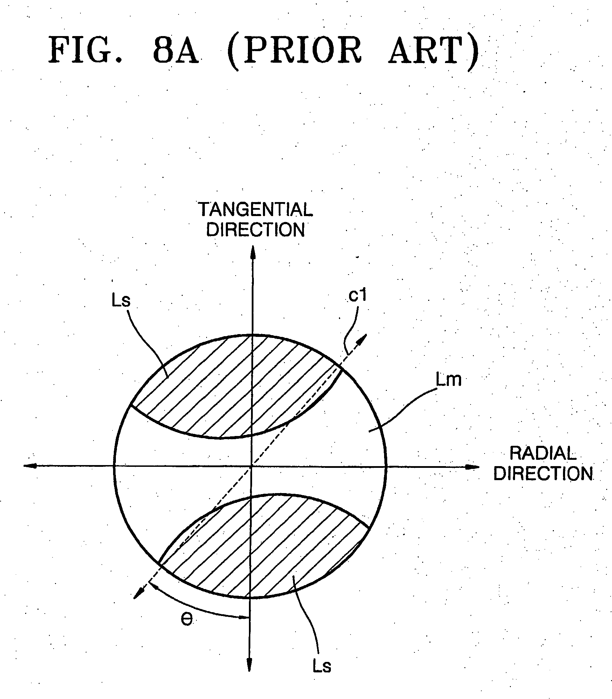

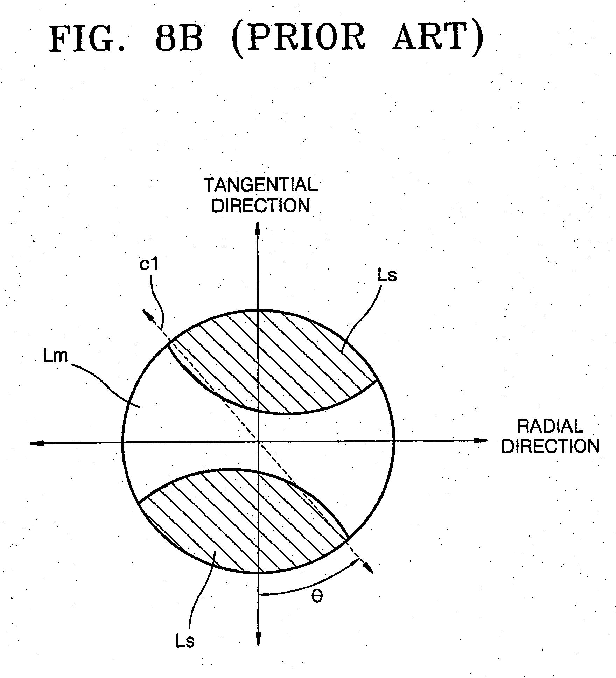

Figure 7 shows a reflected/diffracted light beam (the reflected/diffracted light beam before entering the plate-type beam splitter 5) that passes through the objective lens 7 and travels toward the collimating lens 6. Figures 8A and 8B show the reflected/diffracted beam transmitted through the plate-type beam splitter 5. That is, Figure 8A shows the optical path axis c1 and reflected/diffracted light beam when viewed facing the plate-type beam splitter 5, while Figure 8B shows the optical path axis c1 and reflected/diffracted light beam when viewed facing the photodetector 9. The difference in locations of the optical path axis c1 and overlapped portions of the reflected/diffracted light beam is due to the fact that the reflected/diffracted light beam is observed in opposite directions.

When compared among the reflected/diffracted light beams in Figures 7, 8A, and 8B, the reflected/diffracted light beam before transmitting through the plate-type beam splitter 5 is symmetrically transformed into that after transmitting through the plate-type beam splitter 5 with respect to the optical path axis c1 (or astigmatism axis). This is because the reflected/diffracted light beam transmitted through the plate-type beam splitter 5 undergoes the symmetric transformation with respect to the optical path axis c1 due to astigmatism that causes focal point variations in vertical and horizontal directions.

The reflected/diffracted light beam is symmetrically transformed with respect to the optical path axis c1 or astigmatism axis; however, for ease of understanding and illustration, the optical path axis c1 is used herein as the axis of symmetric transformation of the reflected/diffracted light beam. The astigmatism axis refers to the vertical axis in the plate-type beam splitter 5 and is inclined 45 degrees relative to the optical path axis c1 since the plate-type beam splitter 5 is tilted 45 degrees with respect to the same.

In order to detect a tracking error signal by the DPD method, the 0^{th}-order beam Lm and the ±1^{st}-order beams Ls reflected and diffracted by the optical disc 1 are evenly received by four section plates A-D of the main photodetector 9a in a normal state, i.e., when a light beam spot is formed at the center of a track on the optical disc 1.

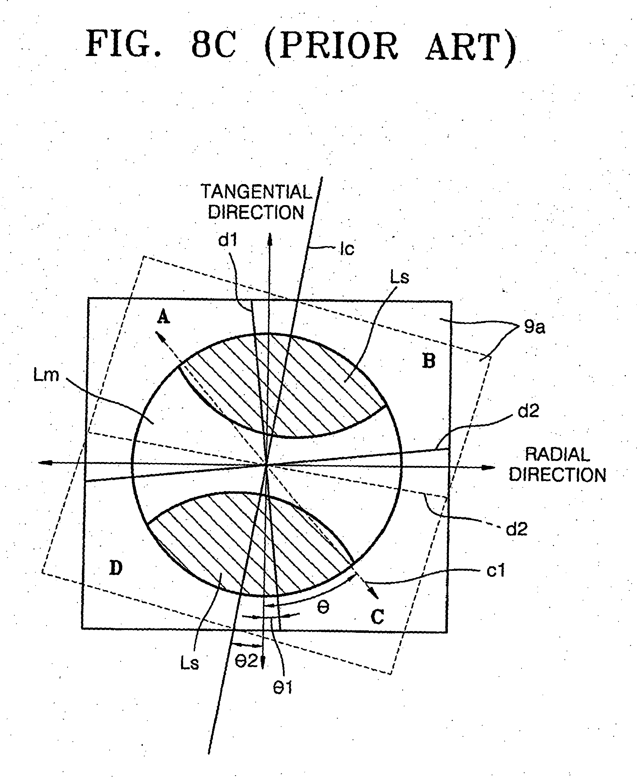

As is evident in Figure 8C showing a case in which the reflected/diffracted light beam of Figure 8B is received by the main photodetector 9a shown in Figure 4, a dividing line d1 of the main photodetector 9a shown in Figure 4 is not identical to a bisector axis 1c for the reflected/diffracted light beam, and they are located in the opposite direction with respect to an axis in the tangential direction. This makes it impossible to detect a tracking error signal by the DPD method without rotation of the photodetector 9. That is, to enable detection of a tracking error signal using the DPD method, the photodetector 9 needs to rotate at a significantly large angle.

Here, the bisector axis 1c for the reflected/diffracted light beam is defined as an axis that passes through the center of the reflected/diffracted light beam received by the main photodetector 9a and divides the ±1^{st}-order diffracted beams Ls into two equal parts in a normal state in which the sizes of regions where the ±1^{st}-order diffracted beams Ls overlap the 0^{th} -order diffracted beam Lm are identical and the overlapping regions are symmetrical with respect to the axis in the tangential direction.

In Figure 8C, the main photodetector 9a indicated by a solid line does not rotate, while that indicated by a dotted line rotates so that the dividing line d1 is identical to the bisector axis 1c for the reflected/diffracted light beam in order to detect a tracking error signal by the DPD method.

As can be seen in Figure 8C, in the case of applying the conventional arrangement method, the photodetector 9 needs to rotate at an angle derived by adding the absolute value of an angle θ1 at which the dividing line d1 of the main photodetector 9a is inclined relative to the axis in the tangential direction to the absolute value of an angle θ2 at which the bisector axis 1c for the reflected/diffracted light beam is inclined relative to the axis in the tangential direction.

When the optical pickup system is arranged so that the optical path axis c1 forms an angle of 35 degrees or less with respect to the axis in the tangential direction and the optical pickup is arranged toward the central axis Mc of the motor from the right as shown in Figure 4 according to the conventional method, the bisector axis 1c for the reflected/diffracted light beam forms an angle of approximately 10 degrees or more with respect to the axis in the tangential direction. Since the dividing line d1 of the main photodetector 9a in the photodetector 9 is tilted at approximately 5-10 degrees with respect to the axis in the tangential direction in the opposite direction to the bisector axis 1c, the photodetector 9 has to rotate at an angle of 15 degrees or more for detection of a tracking error signal using the DPD method.

For example, when the bisector axis 1c forms an angle of approximately 10 degrees with respect to the axis in the tangential direction since the optical path axis c1 of the optical pickup system is tilted 35 degrees with respect to the axis in the tangential direction, if the dividing line d1 of the photodetector 9 is inclined 6 degrees relative to the axis in the tangential direction, the photodetector 9 needs to rotate at approximately 16 degrees. For another example, if the dividing line d1 is inclined 10 degrees relative to the axis in the tangential direction, the photodetector 9 has to rotate at 20 degrees.

Although Figure 8C only shows the main photodetector 9a for simplification, as the main photodetector 9a rotates, the entire photodetector 9 shown in Figure 5 rotates.

When the optical pickup system is arranged so that the optical path axis c1 is tilted with respect to the tangential direction and the photodetector 9 is placed toward the rotation center Mc of the motor according to the conventional method as illustrated in Figure 4, there are difficulties in detecting tracking error signals by DPD and three-beam methods using one photodetector 9.

That is, in order to detect a tracking error signal by the DPD method, the photodetector 9 has to rotate to the extent to prevent deviation of sub-beams for detecting a tracking error signal by a three-beam method from the sub-photodetectors 9b and 9c. Angles of rotation available are normally less than 15 degrees.

In the case of arranging the optical pickup system as shown in Figure 4, since the reflected/diffracted light beam rotates in the direction in which the bisector axis 1c moves away from the dividing line d1 of the main photodetector 9a with respect to the optical path axis c1, it may be necessary to rotate the photodetector 9 at an angle of 15 degrees or more as shown in Figure 8C in order to enable detection of a tracing error signal by the DPD method by making the dividing line d1 of the main photodetector d1 identical to the bisector axis 1c for the reflected/diffracted light beam. If the photodetector 9 rotates at 15 degrees or more in this way, the sub-beams tend to deviate from the sub-photodetectors 9b and 9c, which makes it difficult to detect a tracking error signal by the three-beam method.

That is, arranging the optical pickup system according to the conventional method as shown in Figure 4, makes it difficult to detect a tracking error signals using both DPD and three-beam methods with a single photodetector.

US 6,044,048 which represents the closest prior art, discloses an optical pickup configured for recording and/or reproducing a signal on or from an optical disk. The optical pickup has a configuration which allows focussing error signals and tracking error signals of plural disks of different types to be detected by a common photodetctor. This document forms the precharacterising portion of the claims appended hereto.

Embodiments of the present invention provide a method for arranging an optical pickup system on a deck of an optical recording and/or reproducing apparatus that enables detection of a tracking error signal based on a three-beam method and by a differential phase detection (DPD) method using one photodetector. Embodiments also provide an optical recording and/or reproducing apparatus having the optical pickup system arranged using the above method.

According to the present invention there is provided an apparatus and method as set forth in the appended claims. Preferred features of the invention will be apparent from the dependent claims, and the description which follows.

For a better understanding of the invention, and to show how embodiments of the same may be carried into effect, reference will now be made, by way of example, to the accompanying diagrammatic drawings in which:
Figure 1 schematically shows an example of the optical configuration of an optical pickup;
Figure 2 is a plan view schematically showing a state in which 0^{th}-order and ±1^{st}-order beams diffracted by a grating are focused onto an optical disc as a main light beam spot S0 and two sub-light beam spots S1 and S2, respectively, to enable detection of a tracking error signal by a three-beam method;
Figure 3 is an enlarged view of the plate-type beam splitter shown in Figure 1;
Figure 4 is a plan view schematically showing a structure in which the optical pickup system of Figure 1 is arranged on a deck of an optical recording and/or reproducing apparatus by a conventional method;
Figure 5 is a plan view showing an example of a photodetector constructed to enable detection of tracking error signals by the three-beam method and differential phase detection (DPD) method;
Figure 6 shows a state in which diffraction occurs on the edge of a pit P when forming a light beam spot in the pit P on an optical disc;
Figure 7 shows a reflected/diffracted light beam (before transmitting through the plate-type beam splitter) that passes through the objective lens and travels to the collimating lens when the optical pickup system of Figure 1 is arranged according to a conventional method;
Figure 8A shows a reflected/diffracted light beam transmitted through the plate-type beam splitter in the optical pickup system of Figure 1 arranged according to the conventional method, when viewed facing the plate-type beam splitter;
Figure 8B shows the reflected/diffracted light beam of Figure 8A when viewed facing the photodetector;
Figure 8C shows a main photodetector indicated by a solid line that does not rotate and a main photodetector indicated by a dotted line that rotates so that the dividing line is identical to a bisector axis for the reflected/diffracted light beam in order to receive the reflected/diffracted light beam of Figure 8B enabling detection of a tracking error signal by the DPD method;
Figure 9 shows an example in which the optical pickup system of Figure 1 is arranged on a deck of an optical recording and/or reproducing apparatus by an arrangement method according to an embodiment of the present invention;
Figure 10 shows a reflected/diffracted light beam (before transmitting through the plate-type beam splitter) that passes through the objective lens and travels to the collimating lens when the optical pickup system of Figure 1 is arranged by the arrangement method according to embodiments of the present invention;
Figure 11 shows a reflected/diffracted light beam transmitted through the plate-type beam splitter in the optical pickup system of Figure 1 arranged by the arrangement method according to embodiments of the present invention, when viewed facing the plate-type beam splitter;
Figure 12 shows the reflected/diffracted light beam of Figure 11 when viewed facing the photodetector;
Figure 13 shows a main photodetector indicated by a solid line that does not rotate and a main photodetector indicated by a dotted line that rotates so that the dividing line is identical to a bisector axis for the reflected/diffracted light beam in order to receive the reflected/diffracted light beam of Figure 12 enabling detection of a tracking error signal by the DPD method; and
Figure 14 is a plan view showing an example of a photodetector constructed to enable detection of tracking error signals by the three-beam method and DPD method.

An optical pickup system arranged by a arrangement method according to embodiments of the present invention there is provided a light source, a diffractive optical element, i.e., diffraction grating that diffracts a light beam incident from the light source and splits it into three or more beams, a plate-type beam splitter for converting the propagation path of the light beam, and a photodetector comprised of at least one main photodetector having four or more sections, and a plurality of sub-photodetectors.

The optical pickup system, constructed so that a reflecting mirror redirects the propagation path of a light beam emitted from the light source toward an optical disc which is a recording medium, is mounted on a deck of an optical recording and/or reproducing apparatus. The optical pickup system arranged by the arrangement method according to the present invention and optical recording and/or reproducing apparatus using the optical pickup system have the optical configuration and arrangement that allows detection of tracking error signals by a three-beam method and a differential phase detection (DPD) method. The optical configuration of the optical pickup system arranged according to the arrangement method of the present invention refers to the optical pickup system previously shown and described with references to Figures 1 and 2.

Figure 9 shows an example in which the optical pickup system of Figure 1 is arranged on a deck of an optical recording and/or reproducing apparatus by an arrangement method according to an embodiment of the present invention. To shorten the description of elements performing substantially the same or similar function as much as possible, the elements performing substantially the same or similar function as those in Figures 1, 2 and 4 are represented by the same reference numerals.

Referring to Figure 9, according to the method for arranging the optical pickup of the present invention, where an axis of propagation path of the light beam transmitted through the beam splitter 5 to the photodetector 9 is an optical path axis c2, the optical pickup system is arranged so that the optical path axis c2 is tilted with respect to an axis in a tangential direction and the photodetector 9 is placed away from the rotation center Mc of the motor. As described above, the tangential direction means the direction of a series of pits or marks formed along a track on the optical disc 1.

Even when the optical pickup system is arranged in this way, the reflected/diffracted light beam transmits through the plate-type beam splitter 5 and is symmetrically transformed with respect to the optical path axis c2 or astigmatism axis.

The light beam emitted onto and reflected from the optical disc 1 becomes the reflected/diffracted light beam having a structure in which the ±1^{st}-order diffracted beams Ls partially overlap the 0^{th}-order diffracted beam Lm due to the presence of pits or marks formed on the optical disc 1. The ±1^{st}-order diffracted beams Ls overlapping the 0^{th}-order diffracted beam Lm in a normal state has a symmetrical distribution with respect to the axis in the tangential direction.

The reflected/diffracted light beam is as described with references to Figures 6 and 7, so a detailed description thereof will be omitted. Also, the principle of symmetrical transformation with respect to the optical path axis c2 as the reflected/diffracted light beam transmits through the plate-type beam splitter 5 is apparent from the previous description related to the conventional arrangement method for the optical pickup system, so a detailed description will be omitted.

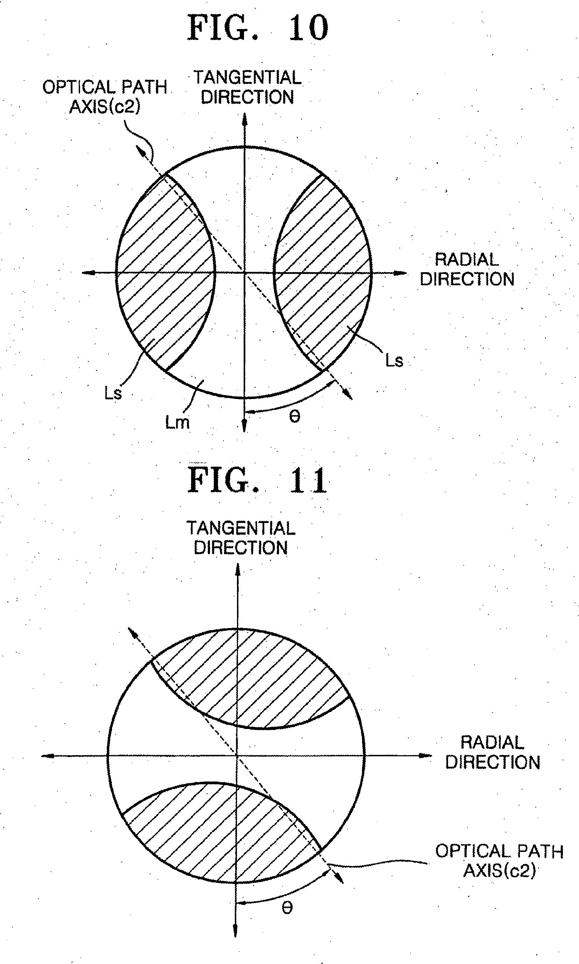

Figure 10 shows a reflected/diffracted light beam (before transmitting through the plate-type beam splitter) that passes through the objective lens. When compared between the reflected/diffracted light beams of Figures 7 and 10 applying the conventional arrangement method and arrangement method of the present invention, respectively, it can be seen that they are of the same shape but the optical path axes c1 and c2 are symmetrical to each other with respect to the axis in the tangential direction.

In order to clarify the difference in operation between the arrangement method of the present invention and the conventional arrangement method, Figure 10 shows an example in which the optical path axis c2 is symmetrical to the optical path axis c1 shown in Figure 7 with respect to the axis in the tangential direction. Thus, the optical path axis c2 is not necessarily symmetrical to the optical path axis c1 with respect to the axis in the tangential direction. The important point is to arrange the optical pickup so that the optical path axis c2 is located with respect to the axis in the tangential direction in the opposite direction to the conventional optical path axis c1.

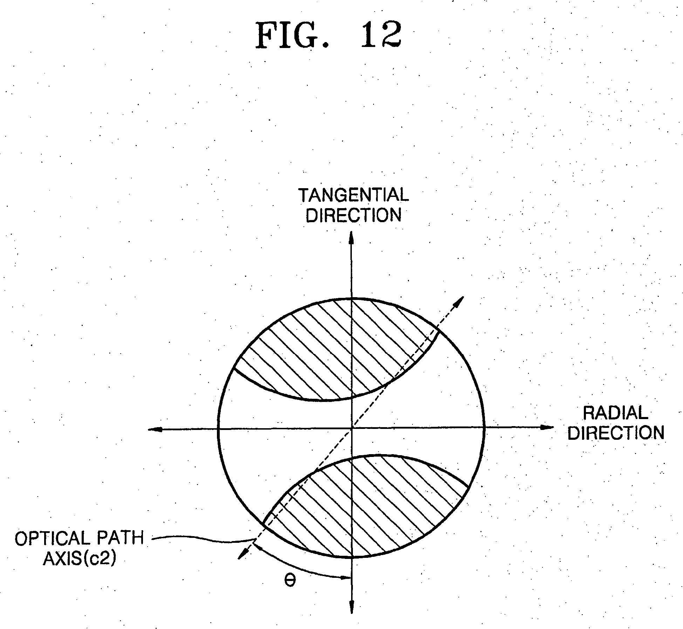

Figures 11 and 12 show the reflected/diffracted light beams transmitted through the plate-type beam splitter 5. Figure 11 shows the optical path axis c2 and reflected/diffracted light beam when viewed facing the plate-type beam splitter, while Figure 12 shows the same when viewed facing the photodetector. The difference in locations of the optical path axis c2 and overlapped portions of the reflected/diffracted light beam is due to the fact that the reflected/diffracted light beam is observed in opposite directions.

As previously described with reference to Figure 5, the reflected/diffracted light beam shown in Figures 10 through 12 has a structure in which the 0^{th}-order beam reflected/diffracted after having been emitted in the pit on the optical disc 1 is partially overlapped by the ±1^{st}-order beams.

Referring to Figures 10, 11, and 12, even when the optical pickup is arranged using the arrangement method according to the present invention, the reflected/diffracted light beam before transmitting through the plate-type beam splitter 5 is symmetrically transformed into that after transmitting through the plate-type beam splitter 5 with respect to the optical path axis c2 (astigmatism axis) due to astigmatism that causes focal point variations in vertical and horizontal directions.

The astigmatism axis is inclined 45 degrees relative to the optical path axis c2 since the plate-type beam splitter 5 is tilted 45 degrees with respect to the same.

Here, the reflected/diffracted light beam is symmetrically transformed with respect to the optical path axis c2 or astigmatism axis; however, for ease of understanding and illustration, the optical path axis c2 is used herein as the axis of symmetric transformation of the reflected/diffracted light beam.

In the case of applying the arrangement method of the present invention, as shown in Figures 11 and 12, since the optical path axis c2 is inclined with respect to the axis in the tangential direction so that the photodetector 9 is located away from the rotation center Mc of the motor, the reflected/diffracted light beam rotates in the opposite direction to that in the case of applying the conventional arrangement method when it transmits through the plate-type beam splitter 5.

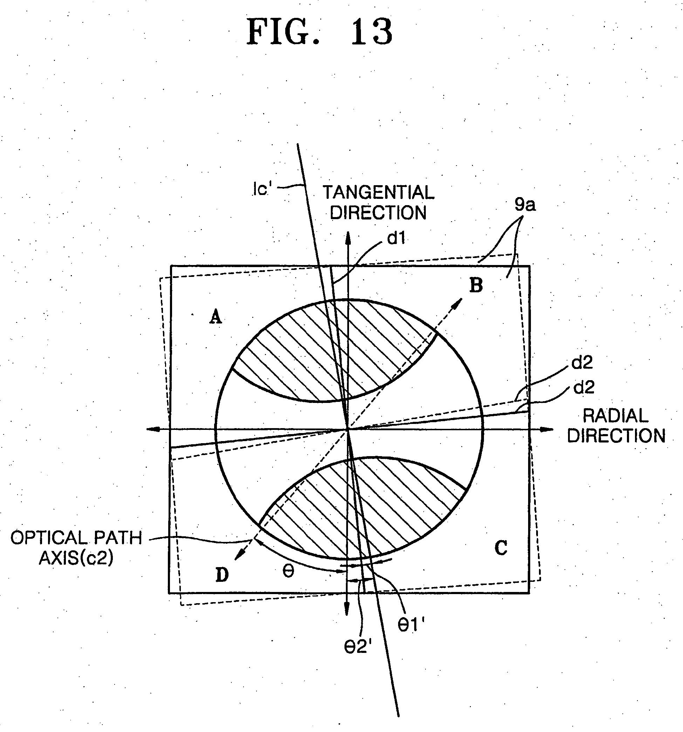

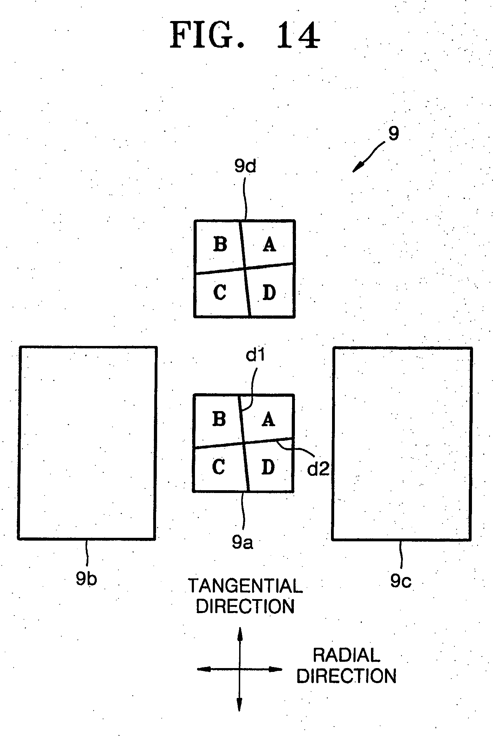

In this case, in the case of using the photodetector equipped with a main photodetector split into at least four sections by oblique dividing lines d1 and d2 as the photodetector 9 as shown in Figures 5 and 14 which will be described later, the dividing line d1 of the main photodetector 9a and a bisector axis lc' for the reflected/diffracted light beam are placed on the same side with respect to the axis in the tangential direction as shown in Figure 13.

Here, the bisector axis lc' for the reflected/diffracted light beam is defined as an axis that passes through the center of the reflected/diffracted light beam received by the main photodetector 9a and divides the portions of the ±1^{st}-order diffracted beams Ls into two equal parts in a normal state in which the sizes of regions where the ±1^{st}-order diffracted light beams Ls overlap the 0^{th}-order diffracted beam Lm are identical and the overlapping regions are symmetrical with respect to the axis in the tangential direction.

The photodetector 9 is comprised of the single main photodetector 9a having four sections and the pair of sub-photodetectors 9b and 9c as shown in Figure 5, or a pair of main photodetectors 9a and 9d and the pair of sub-photodetectors 9b and 9c as shown in Figure 14. In this case, the main photodetectors 9a and/or 9d are split into at least four sections by the oblique dividing lines d1 and d2. The dividing lines d1 and d2 of the main photodetectors 9a are inclined with respect to axes in the tangential and radial directions before the photodetector 9 is adjusted by rotation.

The photodetectors 9 of Figures 5 and 14 is constructed to detect tracking error signals using both a three-beam method and a DPD method.

If the optical pickup system is arranged as described above, the optical path axis c2 is tilted with respect to the axis in the tangential direction so that the photodetector 9 is placed away from the rotation center Mc of the motor, and the angle between one dividing line d1 of the main photodetector 9a and bisector axis lc' for the reflected/diffracted light beam can be minimized. Furthermore, if the dividing line d1 of the main photodetector 9a is not identical to the axis in the tangential direction, they are positioned on the same side with respect to the axis in the tangential direction.

Once the overall optical pickup system has been arranged in this way, if the arrangement of the photodetector 9 is selectively optimized to enable detection of a tracking error signal by the DPD method, it is possible to detect tracking error signals by the three-beam method and DPD method using the detection signal of the photodetector 9.

In this case, the arrangement of the photodetector 9 is selectively optimized in the following way. If the photodetector 9 rotates by a small angle θ2'-θ1' corresponding to the difference between an angle θ2' formed by the bisector axis lc' for the reflected/diffracted light beam with respect to the axis in the tangential direction and an angle θ1' formed by the dividing line d1 of the main photodetector 9a with respect to the same, the dividing line d1 can be coincident with the bisector axis lc' for the reflected/diffracted light beam. In this case, the rotation angle of the photodetector 9 may be less than 15 degrees.

For example, if the optical path axis c2 forms an angle of 35 degrees with respect to the axis in the tangential direction in the direction away from the rotation center Mc of the motor and the dividing line d1 forms 6 degrees with respect to the same, an angle formed by the bisector axis 1c' for the reflected/diffracted light beam with respect to the axis in the tangential direction is 10 degrees, so the angle between the bisector axis lc' and dividing line d1 of the main photodetector 9a is 4 degrees. Thus, rotation of the photodetector 9 by 4 degrees makes the dividing line d1 coincident with the bisector axis lc' for the reflected/diffracted light beam. Of course, if the dividing line d1 of the main photodetector 9a forms an angle of 10 degrees with respect to the axis in the tangential direction, it eliminates the need to rotate the photodetector 10 since the angles formed by the bisector axis lc' and dividing line d1 with respect to the axis in the tangential direction are identical to each other.

That is, when the optical pickup system is arranged according to the arrangement method of the present invention, if the optical path axis c2 forms 35 degrees relative to the axis in the tangential direction and the dividing line d1 of the main photodetector 9a is inclined 10 degrees relative to the same, it is not necessary to rotate the photodetector 9 since the dividing line d1 is coincident with the bisector axis lc' for the reflected/diffracted light beam.

As described above, a method for arranging the optical pickup system according to the present invention can minimize the angle of rotation of the photodetector 9 for making the dividing line d1 coincident with the bisector axis lc' for the reflected/diffracted light beam as compared to the conventional method. Furthermore, the photodetector 9 may not need to rotate in some occasions according to the angles formed by the optical path axis c2 and dividing line d1 of the main photodetector 9a with respect to the axis in the tangential direction.

Thus, the arrangement method of the present invention makes it possible to sufficiently receive sub-beams onto the sub-photodetectors 9b and 9c of the photodetector 9, thereby enabling detection of a tracking error signal using one photodetector based on the three-beam method and by DPD.

That is, when the optical pickup system is arranged according to the present invention, since the bisector axis lc' for the reflected/diffracted light beam and the dividing line d1 of the photodetector 9 are inclined in the same direction with respect to the axis in the tangential direction, the former can be coincident with the latter without rotation of or by slightly rotating the photodetector 9. This makes it possible to detect tracking error signals by DPD and three-beam methods using one commercially available photodetector comprised of one or more main photodetectors split by oblique dividing lines and a plurality of sub-photodetectors as shown in Figures 5 and 14.

Meanwhile, in the present invention, it is desirable to arrange the light source 3 at a location close to the rotation center Mc of the motor. The arrangement of the optical pickup system according to the present invention in which the light source 3 is placed toward the rotation center Mc of the motor as shown in Figure 9 requires the space of a similar size compared to the conventional arrangement shown in Figure 4 since the light source 3 can be placed toward the rotation center Mc of the motor while the photodetector 9 is placed away from the same. Thus, the arrangement method according to the present invention provides a sufficiently compact optical recording and/or reproducing apparatus.

If the optical pickup system is mounted on the optical recording and/or reproducing apparatus using the arrangement method of the present invention as described above, it is possible to detect tracking error signals by both DPD and three-beam methods by using a reception signal generated by a single photodetector comprised of at least one main photodetector and a plurality of sub-photodetectors as shown in Figure 5.

While a method for arranging an optical pickup system and an optical recording and/or reproducing apparatus having a deck on which the optical pickup system is mounted according to the arrangement method of the present invention have been particularly shown and described with reference to the optical pickup system of Figure 1, the arrangement method of the present invention is not limited only to arrangement of the optical pickup system of Figure 1. That is, the arrangement method of the present invention is applicable to a wide variety of types of optical pickup systems which comprise at least one plate-type beam splitter as an optical path changer and require detection of a tracking error signal using one photodetector by both DPD and three-beam methods.

Furthermore, while the optical pickup system has been shown and described as including a light source and a photodetector constructed as shown in Figure 5, the optical configuration of the optical pickup system is limited to this only. For example, the optical pickup system arranged according to the present invention may be a compatible type having two light sources in a single package, known as TWIN LD, for emitting light in the infrared wavelength range appropriate for CD as well as light in the red wavelength range appropriate for DVD, and a photodetector constructed as shown in Figure 14.

Since the TWIN LD in a single package has two separate light sources, if an optical coupler is not used to unite two optical paths of the light beams emitted from the two light sources into a single path, it is desirable to use the photodetector 9 further having at least one main photodetector 9d in the photodetector of Figure 5 as shown in Figure 14.

In this case, as shown in Figure 14, it is desirable that the additional main photodetector 9d as well as the main photodetector 9a have dividing lines oblique with respect to the axes in the tangential and radial directions to enable detection of a focus error signal using astigmatism occurring at the plate-type beam splitter 5.

The principle of symmetrical transformation with respect to the optical path axis c2 or astigmatism axis as the reflected/diffracted light beams for the light beams emitted from the two light sources in the case of using TWIN LD as the light source 3 transmit through the plate-type beam splitter 5 is the same as that described with references to Figures 9-13, so a detailed description for the optical pickup system having the TWIN LD as the light source 3 will be omitted.

Here, the present invention makes it possible to detect a tracking error signal by the DPD method as well as an information signal and a focus error signal using detection signals detected by a main photodetector having four sections as shown in Figures 5 and 14, while detecting a tracking error signal by the three-beam method using detection signals generated by sub-photodetectors. The tracking error signal obtained by the three-beam method is a signal derived by subtracting a detection signal of one sub-photodetector from a detection signal of the other sub-photodetector.

Although the optical pickup system applying the arrangement method according to the present invention has been shown and described as using the photodetector constructed as shown in Figures 5 and 14, various changes in the split structure of a photodetector may be made without departing from the scope of the invention as defined by the appended claims.

Furthermore, while each of the pair of sub-photodetectors has been shown and described as having a single receiving area, each sub-photodetector may be split into at least two sections. Additionally, the optical pickup system may be designed to detect a tracking error signal using another tracking technique based on the three-beam method, such as a differential push-pull method.

Although the above description is focused on the detection of a tracking error signal using the three-beam method, it will be appreciated that the present invention is not limited to this method. In other words, a three-beam method applied to detect a tracking error signal as in the appended claims involves a normal three-beam method and a differential push-pull detection method.

As described above, the arrangement of an optical pickup system according to the method of embodiments of the present invention enables detection of a tracking error signal using one photodetector based on a three-beam method and by DPD.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

## Claims

1. An optical recording and/or reproducing apparatus having an optical pickup system for recording and/or reproducing information on and/or from an optical disc(1), having pits or marks formed thereon, wherein the optical pickup system includes:
a light source (3); and
a diffractive optical element (4); and
a plate-type beam splitter (5); and
a reflecting mirror (2); and an objective lens; and
a photodetector (9); wherein
the optical pickup system is constructed such that all the components of the optical pickup system except the objective lens (7) are arranged along an optical path axis(c) parallel to the optical disc; and
the light source (3) emits a light beam; and
the diffractive optical element (4) diffracts the light beam incident from the light source (3) and splits it into at least three beams comprising a 0^{th} order beam and + 1^{st} order beams; and
the plate-type beam splitter (5) changes the propagation path of the light beams received from the diffractive optical element (4) and directs it to the reflecting mirror (2); and
the reflecting mirror (2) redirects said light beams towards the optical disc (1); and
the optical disc (1) reflects/diffracts the beam and;
the light beam reflected from the optical disc (1) becomes a reflected/diffracted light beam having a structure wherein the ± 1^{st}-order diffracted beams partially overlap a 0^{th}-order diffracted beam due to the presence of edges of a recording pit in a radial direction of the optical disc (1); and
the optical disc (1) reflects / diffracts the light beam back to the reflecting mirror (2) which re-directs it to the plate-type beam splitter (5) wherein the beam is transmitted through the plate-type beam splitter (5) to the photodetector (9) along an optical path axis (c); and the optical pickup system is arranged so that the optical path axis c is tilted relative to an axis in the tangential direction from the pits or marks where the light impinges on the optical disc (1) and the photodetector (9) is placed on the side of the tangential direction away from the rotation centre of a motor for rotating the optical disc; and
the photodetector (9) comprises at least one main photodetector (9a) and a plurality of sub-photodetectors (9b, 9c); **characterised in that**
the main photodetector (9a) is split into at least four sections by dividing lines that cross where the tangential and radial directions meet and are at an oblique angle to the tangential and radial directions; and wherein
the optical pickup system is arranged so that one dividing line of the main photodetector (9a) is placed angled to the same side of an axis, which corresponds to the axis in the tangential direction as a bisector axis (Ic), wherein
the bisector axis (Ic) passes through the centre of the light beam received by the main photo detector (9a) and divides the ±1^{st}-order diffracted beams into two equal parts in a normal state.

2. The apparatus of claim 1, wherein the photodetector (9) is selectively adjusted to rotate so that the dividing line of the main photodetector is coincident with the bisector axis for the reflected/diffracted light beam.

3. The apparatus of claims 2 or 3, wherein the light source (3) is placed at a location relatively close to the rotation center of the motor.

4. A method for arranging an optical pickup system according to any of claims 1-3 on a deck of an optical recording and/or reproducing apparatus, the method comprising:
arranging the optical pickup system so that the optical path axis c is tilted with respect to an axis in the tangential direction from the pits or marks where the light impinges on the optical disc (1) and the photo detector (9) is placed on the side of the tangential direction away from the rotation centre of a motor for rotating the optical disc (1) with respect to the axis of the tangential direction; and
selectively optimizing the arrangement of the photodetector (9) to enable detection of a tracking error signal by a differential phase detection (DPD) method, wherein a tracking error signal can be detected using a detection signal by the photodetector (9) based on a three-beam method and the DPD method; **characterised in that** the method comprises:
selectively optimizing the arrangement of the photodetector (9) by placing one dividing line of the main photodetector (9a) angled to the same side, with respect to an axis corresponding to the axis in the tangential direction, as the bisector axis.

## Patentansprüche

1. Optisches Aufzeichnungs- und/oder Wiedergabegerät mit einem optischen Abtastsystem zum Aufzeichnen und/oder zur Wiedergabe von Informationen auf und/oder von einem optischen Datenträger (1), mit darauf ausgebildeten Vertiefungen oder Markierungen, wobei das optische Abtastsystem Folgendes enthält:
eine Lichtquelle (3); und
ein optisches Beugungselement (4); und
einen scheibenartigen Strahlteiler (5); und
einen reflektierenden Spiegel (2); und
eine Objektivlinse; und
einen Photodetektor (9); wobei
das optische Abtastsystem so aufgebaut ist, dass alle Bauteile des optischen Abtastsystems außer der Objektivlinse (7) entlang einer Lichtwegachse (c) parallel zum optischen Datenträger angeordnet sind; und
die Lichtquelle (3) einen Lichtstrahl abgibt; und
das optische Beugungselement (4) den von der Lichtquelle (3) einfallenden Lichtstrahl beugt und ihn in mindestens drei Strahlen mit einem Strahl 0-ter Ordnung und Strahlen ±1-ter Ordnung teilt; und
der scheibenartige Strahlteiler (5) den Ausbreitungsweg der Lichtstrahlen, die von dem optischen Beugungselement (4) aus empfangen werden, ändert und ihn zu dem reflektierenden Spiegel (2) lenkt; und
der reflektierende Spiegel (2) die Lichtstrahlen in Richtung des optischen Datenträgers (1) umlenkt; und
der optische Datenträger (1) den Strahl reflektiert/beugt; und
der von dem optischen Datenträger (1) reflektierte Lichtstrahl zu einem reflektierten/gebeugten Lichtstrahl mit einer Struktur wird, wobei aufgrund der Gegenwart von Kanten einer Aufzeichnungsvertiefung in einer radialen Richtung des optischen Datenträgers (1) die gebeugten Strahlen ±1-ter Ordnung teilweise einen gebeugten Strahl 0-ter Ordnung überlappen; und
der optische Datenträger (1) den Lichtstrahl zurück zum reflektierenden Spiegel (2) reflektiert/beugt, der ihn zu dem scheibenartigen Strahlteiler (5) umlenkt, wobei der Strahl durch den scheibenartigen Strahlteiler (5) zu dem Photodetektor (9) entlang einer Lichtwegachse (c) übertragen wird; und
das optische Abtastsystem so angeordnet ist, dass die Lichtwegachse c relativ zu einer Achse in der tangentialen Richtung von den Vertiefungen oder Markierungen geneigt ist, wo das Licht auf den optischen Datenträger (1) trifft, und der Photodetektor (9) auf der Seite der tangentialen Richtung weg von dem Drehzentrum eines Motors zum Drehen des optischen Datenträgers angeordnet wird; und
der Photodetektor (9) mindestens einen Hauptphotodetektor (9a) und mehrere Nebenphotodetektoren (9b, 9c) umfasst; **dadurch gekennzeichnet, dass**
der Hauptphotodetektor (9a) von Trennlinien, die sich kreuzen, wo sich die tangentiale und radiale Richtung treffen, und in einem schrägen Winkel zur tangentialen und radialen Richtung liegen, in mindestens vier Abschnitte geteilt wird; und wobei
das optische Abtastsystem so angeordnet ist, dass eine Trennlinie des Hauptphotodetektors (9a) zur gleichen Seite einer Achse, die der Achse in der tangentialen Richtung entspricht, gewinkelt wie eine Bisektorachse (Ic) gelegt wird, wobei
die Bisektorachse (Ic) durch das Zentrum des von dem Hauptphotodetektor (9a) empfangenen Lichtstrahls hindurchläuft und die gebeugten Strahlen ±1-ter Ordnung in zwei gleiche Teile in einem normalen Zustand teilt.

2. Gerät nach Anspruch 1, wobei der Photodetektor (9) selektiv derart zum Drehen eingestellt wird, dass die Trennlinie des Hauptphotodetektors mit der Bisektorachse für den reflektierten/gebeugten Lichtstrahl zusammenfällt.

3. Gerät nach Anspruch 1 oder 2, wobei die Lichtquelle (3) an einen Ort gestellt wird, der dem Drehzentrum des Motors relativ nahe liegt.

4. Verfahren zur Anordnung eines optischen Abtastsystems nach einem der Ansprüche 1-3 auf einem Deck eines optischen Aufzeichnungs- und/oder Wiedergabegeräts, wobei das Verfahren Folgendes umfasst:
Anordnen des optischen Abtastsystems, so dass die Lichtwegachse c in Bezug auf eine Achse in der tangentialen Richtung von den Vertiefungen oder Markierungen geneigt ist, wo das Licht auf den optischen Datenträger (1) trifft, und der Photodetektor (9) auf der Seite der tangentialen Richtung weg von dem Drehzentrum eines Motors zum Drehen des optischen Datenträgers (1) mit Bezug auf die Achse der tangentialen Richtung angeordnet wird; und
selektives Optimieren der Anordnung des Photodetektors (9), um Detektion eines Spurführungsfehlersignals durch ein Differenzphasendetektionverfahren (DPD-Verfahren) zu ermöglichen, wobei ein Spurführungsfehlersignal mithilfe eines Detektionssignals von dem Photodetektor (9) detektiert werden kann, auf Basis eines Dreistrahlverfahrens und des DPD-Verfahrens; **dadurch gekennzeichnet, dass** das Verfahren weiterhin Folgendes umfasst:
selektives Optimieren der Anordnung des Photodetektors (9), indem eine Trennlinie des Hauptphotodetektors (9a) zur gleichen Seite einer Achse, die der Achse in der tangentialen Richtung entspricht, gewinkelt wie eine Bisektorachse (Ic) gelegt wird.

## Revendications

1. Appareil d'enregistrement et/ou de reproduction optique ayant un système optique de lecture pour enregistrer et/ou reproduire des informations sur et/ou depuis un disque optique (1), sur lequel sont formés des creux ou des marques, dans lequel le système optique de lecture comporte :
une source de lumière (3) ; et
un élément optique de diffraction (4) ; et
un diviseur de faisceau du type plaque (5) ; et
un miroir réfléchissant (2) ; et une lentille d'objectif ; et
un photo-détecteur (9) ; dans lequel
le système optique de lecture est construit de telle sorte que tous les composants du système optique de lecture à l'exception de la lentille d'objectif (7) soient agencés le long d'un axe de trajet optique (c) parallèle au disque optique ; et
la source de lumière (3) émet un faisceau de lumière ; et
l'élément optique de diffraction (4) diffracte le faisceau de lumière incident provenant de la source de lumière (3) et le divise en au moins trois faisceaux comprenant un faisceau d'ordre 0 et des faisceaux des ±1 ordres ; et
le diviseur de faisceau de type plaque (5) change le trajet de propagation des faisceaux de lumière reçus depuis l'élément optique de diffraction (4) et le dirige vers le miroir réfléchissant (2) ; et
le miroir réfléchissant (2) redirige lesdits faisceaux de lumière vers le disque optique (1) ; et
le disque optique (1) réfléchit/diffracte le faisceau et ;
le faisceau de lumière réfléchi par le disque optique (1) devient un faisceau de lumière réfléchi/diffracté ayant une structure dans laquelle les faisceaux diffractés des ±1 ordres chevauchent partiellement un faisceau diffracté d'ordre 0 en raison de la présence de bords d'un creux d'enregistrement dans un sens radial du disque optique (1) ; et
le disque optique (1) réfléchit/diffracte le faisceau de lumière de retour vers le miroir réfléchissant (2) qui le redirige vers le diviseur de faisceau du type plaque (5) dans lequel le faisceau est transmis à travers le diviseur de faisceau du type plaque (5) vers le photo-détecteur (9) le long d'un axe de trajet optique (c) ; et
le système optique de lecture est agencé de telle sorte que l'axe de trajet optique c soit incliné par rapport à un axe dans le sens tangentiel depuis les creux ou marques où la lumière frappe le disque optique (1) et le photo-détecteur (9) est placé sur le côté du sens tangentiel à l'écart du centre de rotation d'un moteur pour faire tourner le disque optique ; et
le photo-détecteur (9) comprend au moins un photo-détecteur principal (9a) et une pluralité de photo-détecteurs secondaires (9b, 9c) ; **caractérisé en ce que :**
le photo-détecteur principal (9a) est divisé en au moins quatre sections par des droites de division qui se croisent là où les sens tangentiel et radial se rencontrent et sont à un angle oblique avec les sens tangentiel et radial ; et dans lequel
le système optique de lecture est agencé de telle sorte qu'une droite de division du photo-détecteur principal (9a) soit placée à un angle par rapport au même côté d'un axe, lequel correspond à l'axe dans le sens tangentiel comme axe bissecteur (Ic), dans lequel
l'axe bissecteur (Ic) passe par le centre du faisceau de lumière reçu par le photo-détecteur principal (9a) et divise les faisceaux diffractés des ±1 ordres en deux parties égales dans un état normal.

2. Appareil selon la revendication 1, dans lequel le photo-détecteur (9) est ajusté sélectivement afin de tourner de telle sorte que la droite de division du photo-détecteur principal coïncide avec l'axe bissecteur du faisceau de lumière réfléchi/diffracté.

3. Appareil selon la revendication 2 ou 3, dans lequel la source de lumière (3) est placée à un emplacement relativement proche du centre de rotation du moteur.

4. Procédé d'agencement d'un système optique de lecture selon l'une quelconque des revendications 1 à 3 sur une platine d'un appareil d'enregistrement et/ou de reproduction optique, le procédé comprenant :
l'agencement du système optique de lecture de telle sorte que l'axe de trajet optique c soit incliné par rapport à un axe dans le sens tangentiel depuis les creux ou marques où la lumière frappe le disque optique (1) et le photo-détecteur (9) est placé sur le côté du sens tangentiel à l'écart du centre de rotation d'un moteur pour faire tourner le disque optique (1) par rapport à l'axe du sens tangentiel ; et
l'optimisation sélective de l'agencement du photo-détecteur (9) pour permettre la détection d'un signal d'erreur d'alignement par un procédé de détection de phase différentielle (DPD), dans lequel un signal d'erreur d'alignement peut être détecté en utilisant un signal de détection par le photo-détecteur (9) basé sur un procédé à trois faisceaux et le procédé PDP ; **caractérisé en ce que** le procédé comprend :
l'optimisation sélective de l'agencement du photo-détecteur (9) en plaçant une droite de division du photo-détecteur principal (9a) à un angle par rapport au même côté, relativement à un axe correspondant à l'axe dans le sens tangentiel, comme axe bissecteur.
